Europäisches Patentamt

European Patent Office

Office européen des brevets

(11) Veröffentlichungsnummer: **0 247 403**
**A2**

## (12) EUROPÄISCHE PATENTANMELDUNG

(21) Anmeldenummer: **87106576.9**

(22) Anmeldetag: **06.05.87**

(51) Int. Cl.⁴: **B60T 8/00**

(30) Priorität: **30.05.86 DE 3618305**

(43) Veröffentlichungstag der Anmeldung:
**02.12.87 Patentblatt 87/49**

(84) Benannte Vertragsstaaten:
**DE FR GB SE**

(71) Anmelder: **ROBERT BOSCH GMBH**
**Postfach 50**
**D-7000 Stuttgart 1(DE)**

(72) Erfinder: **Maisch, Wolfgang, Dr.-Ing., Dipl.-Ing.**
**Elbingerweg 4**
**D-7141 Schwieberdingen(DE)**

(74) Vertreter: **Kammer, Arno, Dipl.-Ing.**
**ROBERT BOSCH GmbH Zentralabteilung**
**Patente Postfach 50**
**D-7000 Stuttgart 1(DE)**

(54) **Antiblockierregelsystem.**

(57) In Sonderfällen kann es auch bei einem mit ABS ausgerüsteten Fahrzeug vorkommen, daß Räder, aus denen deren Referenzsignal für die Schlupfregelung gewonnen wird, gleichzeitig blockieren.

Die Erfindung beschäftigt sich mit dem Problem, diesen Fall zu erkennen und vom Stillstand des Fahrzeugs zu unterscheiden und Maßnahmen einzuleiten, um das Blockieren in diesem Fall zu unterbinden.

EP 0 247 403 A2

## Antiblockierregelsystem

Die Erfindung betrifft ein Antiblockierregelsystem mit den Merkmalen des Oberbegriffs des Anspruchs 1.

Derartige Antiblockierregelsysteme sind bekannt. Sie beinhalten im allgemeinen einen gemischten Regler, d.h., eine Auswerteschaltung, die sowohl Beschleunigungs-und Verzögerungssignale der Räder als auch Schlupfsignale in die Bremsdruckregelung einbeziehen.

Für die Schlupfregelung wird ein sogenanntes Referenzsignal benötigt, das dem Verlauf der Fahrzeuggeschwindigkeit angenähert ist und mit dem die Radgeschwindigkeitssignale zur Erzeugung von Schlupfsignalen verglichen werden. Dieses Referenzsignal wird aus Radgeschwindigkeitssignalen unter Verwendung von Rampen in bekannter Weise gewonnen. Häufig werden die Geschwindigkeiten der Räder einer Achse und bevorzugt einer Diagonale in die Bildung des Referenzsignals einbezogen.

Die im Anspruch 1 angegebene erfindungsgemäße Lehre hat den Vorteil, daß sie eine unter besonderen Bedingungen, z.B. bei Nutzfahrzeugen, insbesondere bei Sattelaufliegern vorkommende Situation, die durch einen üblichen Regler nicht erfaßt wird, erkennt und ausschaltet: Es kann nämlich unter besonderen Straßenbedingungen und insbesondere dann (wie bei Sattelaufliegern), wenn wenige Räder in die Referenzbildung einbezogen sind, trotz des üblichen Reglers vorkommen, daß die zur gemeinsamen Referenzsignalbildung herangezogenen Rädar - obwohl das Fahrzeug noch fährt - gleichzeitig zum Blockieren kommen, und daß dies vom Regler nicht erkannt wird, weil Beschleunigungs-und Verzögerungssignale nicht mehr vorkommen und bei Radgeschwindigkeiten und Referenzgeschwindigkeit gleich Null keine Schlupfsignale mehr gebildet werden können (die steilen Referenzrampen bei niedrigen Reibungskoeffizienten, lassen die Referenz schnell abfallen).

Dieser gleichzeitige Radstillstand wird erfindungsgemäß erkannt und es wird getestet, ob der Radstillstand durch Anhalten des Fahrzeugs oder durch Radblockieren zustande gekommen ist. Hierzu wird durch einen Druckabbauimpuls auf die Bremsdrucksteuereinheit wenigstens eines Rads der Bremsdruck dort abgebaut und nun überwacht, ob das Rad wieder anläuft. Läuft es an, so lag der unerwünschte Fall der Radblockierung vor, und aufgrund dieser Erkenntnis wird die ABS-Regelung wieder in Gang gebracht. Dies geschieht dadurch, daß auch an den anderen Rädern ein Druckabbau erfolgt, sodaß auch diese Räder wieder anlaufen und damit die Regelung wieder einsetzt.

Die Dauer des erwähnten Druckabbauimpulses kann variabel sein und von der Vorgeschichte abhängig gemacht werden, so z.B. um so länger sein, je geringer der festgestellte Reibbeiwert zwischen Reifen und Straße ist; wenn das Fahrzeug steht, verhindern das oder die übrigen Räder das Wegrollen des Fahrzeugs.

Anhand der Zeichnung wird ein Ausführungsbeispiel der Erfindung erläutert.

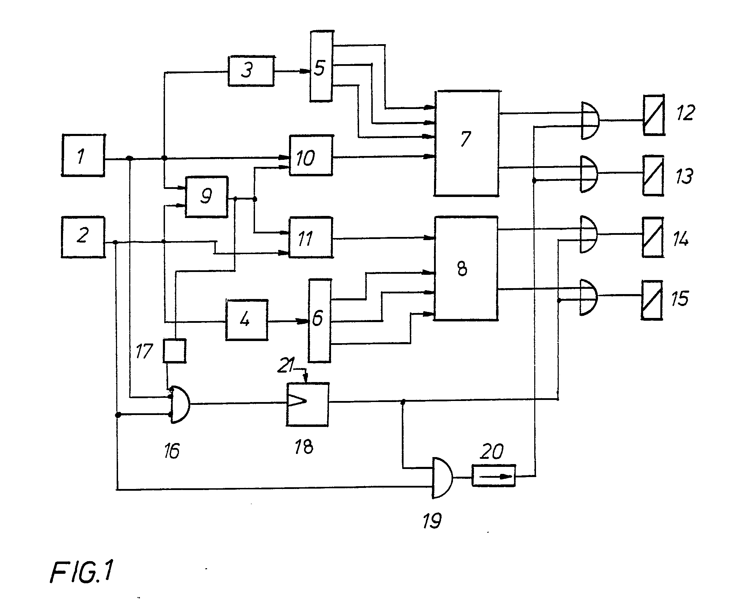

In Fig. 1 sind mit 1 und 2 zwei Meßwertgeber bezeichnet, die den Radgeschwindigkeiten diagonal gegenüber liegender Räder entsprechende Signale abgeben. Bei Sattelaufliegern mit einer Achse wären die Meßwertgeber den Rädern dieser Achse zugeordnet. Diese Signale werden Differenzierern 3 und 4 zugeführt, an deren Ausgängen Schwellwertstufen 5 und 6 angeschaltet sind. Die Schwellwertstufen 5 und 6 haben z.B. je drei Schwellenwerte: sie geben je ein Signal, wenn ein vorgegebener Verzögerungswert unterschritten wird (-b) und wenn zwei unterschiedliche Beschleunigungswerte überschritten werden ($+b_1$ und $+b_2$). Diese Signale werden Logikblöcken 7 bzw. 8 zugeführt.

Die Ausgangssignale der Meßwertgebar 1 und 2 werden außerdem einem bekannten Block 9 zur Bildung des Referenzsignals zugeführt, das seinerseits Komperatoren 10 und 11 zugeführt wird. Diese Komperatoren 10 und 11 geben ein Schlupfsignal ab, wenn die Radgeschwindigkeit in vorgegebener Weise von der Fahrzeuggeschwindigkeit abweicht. Auch diese Schlupfsignale werden den Logikblöcken 7 und 8 zugeführt und dort in vorgegebener und bekannter Weise mit den von den Schwellwertstufen 5 und 6 abgegebenen beschleunigungs-bzw. verzögerungsabhängigen Signalen zur Erzeugung von Bremsdrucksteuersignalen für Einlaßventile 12 und 14 und Auslaßventile 13 und 15 verknüpft.

Der bis jetzt beschriebene Antiblockierregler arbeitet in bekannter Weise.

In besonderen und seltenen Situationen kann es trotz des Reglers dazu kommen, daß beide Räder zum Blockieren kommen. Der Erfindung liegt die Aufgabe zugrunde diese Fälle zu erkennen und Abhilfe einzuleiten. Zum Erkennen, daß beide Räder zum Stillstand gekommen sind, dient ein Und-Gatter 16, dem die invertierten Ausgangssignale der Meßwertgeber 1 und 2 und eines Komperators 17 zugeführt werden. Geben die Meßwertgeber keine Signale ab und unterschreitet das Referenzsignal eine vorgegebene sehr niedrige Schwelle, so entsteht ein Ausgangssignal des Und-Gatters 16, das über den dynamischen Eingang S ein monostabiles Glied 18 setzt. Das monostabile Glied 18 gibt einen Impuls bestimmter Dauer ab.

Dieser Impuls, der den Zustand signalisiert, daß beide Räder nicht mehr drehen, wird über Oder-Gatter den Ventilen 14 und 15 zugeführt, wodurch der Bremsdruck an dem zugehörigen Rad über die Länge des Impulses abgesenkt wird. Es ist natürlich auch möglich, z.B. in Abhängigkeit von der Vorgeschichte den Ventilen 12/13 den Druckabbauimpuls zuzuführen.

Nach Abfall des Signals des monostabilen Glieds 18 wird an der Bremse, der die Ventile 14 und 15 zugeordnet sind, wieder Druck aufgebaut.

Sind die Räder, denen die Meßwertgeber 1 und 2 zugeordnet sind, blockiert während das Fahrzeug noch fährt, so wird bei Druckabbau mittels des Impulses (z.B. 1 sec lang) des monostabilen Glieds 18 das zugehörige Rad anlaufen und damit ein Und-Gatter 19 durchlässig machen, dessen Ausgangssignale ein Zeitglied 20 anstößt. Dessen über seine Zeitkonstante dauerndes Ausgangssignal senkt nun mittls der Ventile 12 und 13 auch den Bremsdruck am anderen Rad ab. Damit laufen beide Räder wieder an und werden dann von Regler im Bremsdruck in üblicher Weise wieder geregelt. Ein Pfeil 21 soll andeuten, daß man die Zeitkonstante des monostabilen Glieds 18 variieren kann, und zwar aufgrund des Reibwerts zwischen Reifen und Fahrbahn oder anderer Kriterien, die der Vorgeschichte zu entnehmen sind.

**Ansprüche**

1. Antiblockierregelsystem enthaltend wenigstens zwei Meßwertgeber zur Ermittlung der Radgeschwindigkeit wenigstens zweier Fahrzeugräder, eine Auswerteschaltung, der die Signale der Meßwertgeber zugeführt werden und die Ansteuersignale für den einzelnen Rädern zugeordnete Bremsdrucksteuereinheiten in Abhängigkeit vom Bewegungsverhalten der Räder erzeugt, wobei die Auswerteschaltung einen Schlupfregler enthält, der aus den Signalen der Meßwertgeber ein dem Verlauf der Fahrzeuggeschwindigkeit angenähertes Bezugssignal erzeugt, mit dem die Signale der Meßwertgeber zur Erzeugung von Schlupfsignalen verglichen werden, dadurch gekennzeichnet , daß bei Auftreten eines Signalzustands, der ein Anhalten des Fahrzeugs signalisiert, an wenigstens einer der Radbremsen mittels eines Druckabsenkimpulses Druck abgesenkt wird und daß bei einer folgenden Geschwindigkeitszunahme des wenigstens einen Rads die Regelung des Bremsdrucks erneut in Gang gesetzt wird.

2. Antiblockierregelsystem nach Anspruch 1, dadurch gekennzeichnet, daß die Länge des Druckabsenkimpulses von dem vorhandenen Reibungskoeffizienten abhängig ist.

FIG.1

R 20648